# EUROPEAN PATENT SPECIFICATION

(11) **EP 2 315 021 B1**
(45) Date of publication and mention of the grant of the patent: **06.12.2017**
(21) Application number: 09013310.9
(22) Date of filing: 21.10.2009
(51) Int. Cl.: G01N 30/32, G01N 30/24, G01N 30/66, G01N 30/46

(54) **Gas chromatography with ambient pressure stability control**
Gaschromatographie mit Umgebungsdruckstabilitätsregelung
Chromatographie en phase gazeuse avec une commande de stabilité à la pression ambiante

(43) Date of publication of application: 27.04.2011
(73) Proprietor: Bruker Daltonik GmbH, 28359 Bremen (DE)
(72) Inventor: Hoogerwerf, Ing. W.J., AA 4371 Koudekerke (NL)
(74) Representative: Beck Greener

(56) References cited:
- EP-A2- 0 829 717
- DE-A1- 2 645 841
- US-A- 4 151 741
- US-A- 5 711 786
- US-A1- 2003 108 448
- US-A1- 2006 196 247

## Description

### FIELD OF THE INVENTION

The present invention relates generally to gas chromatography and particularly to controlling the operating pressure of the pneumatic portion of a gas chromatography apparatus.

### BACKGROUND OF THE INVENTION

Gas chromatography (GC) entails the analytical separation of a vaporized or gas-phase sample. In a GC system, a chemically inert carrier gas such as hydrogen, helium or nitrogen is utilized as the mobile phase for elution of the analyte sample in an analytical (or sample) column. The carrier gas is introduced into the system upstream of the analytical column. The sample is typically injected into the gas stream at or near the head of the analytical column and is thus carried by the carrier gas through the analytical column. The analytical column is typically housed in a thermally controlled oven or alternatively may be directly heated such as by controlled electrically resistive heating means. The analytical column may be constructed of stainless steel, glass, fused silica, Teflon®, or the like. The analytical column may be of the packed or open tubular (capillary) type. The analytical column contains a stationary phase (particles, films or layers of a selected composition) by which different components of the sample are retained differently. Thus, as the sample flows through the analytical column it becomes separated into discrete components of differing analytical (qualitative and/or quantitative) significance. The eluent from the analytical column flows to a gas detector provided with the GC system. Various types of detectors may be employed such as, for example, a flame ionization detector (FID), thermal conductivity detector (TCD), etc. The choice of detector often depends on the sample being analyzed. Moreover, the type of carrier gas utilized often depends on the type of detector utilized. Additionally, depending on detector design, the carrier gas may be utilized as a reference gas by also flowing the carrier gas through a separate reference column (not containing the sample) to the gas detector under the same conditions (e.g., temperature, pressure, stationary phase, etc.) as the analytical column. Generally, the gas detector is of a type responsive to a property of the separated analytes (e.g., concentration) and converts the outputted flow of separated analytes to electrical measurement signals, which are then transmitted to a data processor. The data processor derives peak information or other useful analytical information from the measurement signals received. When a reference column is utilized, measurements of the eluent of the reference column are also taken into account in the data acquisition.

A GC system typically utilizes one or more gas flow (flow rate and/or pressure) controllers to control (switch on and off) the flow of carrier gas to the GC column. For the GC system to operate properly, the carrier gas must flow through a GC column at a particular working pressure (i.e., column head pressure). The gas flow controller(s) may be of either the mechanical or electronic type. Conventionally, both types of gas flow controllers regulate pressure relative to ambient pressure, thus making them susceptible to short-term ambient pressure fluctuations caused by natural conditions (wind, drafts) or other conditions (e.g., opening/closing doors in a laboratory, etc.). From the perspective of data acquisition, these pressure fluctuations cause disturbed baselines and high noise levels, which in turn result in higher detection limits and reduced repeatability of results. These problems have been particularly noted in cases where a GC system utilizes a TCD as the detector. A TCD typically includes ambient pressure outlets, thereby making the detector also susceptible to ambient pressure fluctuations. In addition, capillary GC systems in which the carrier gas flows are very low are particularly sensitive to ambient pressure fluctuations.

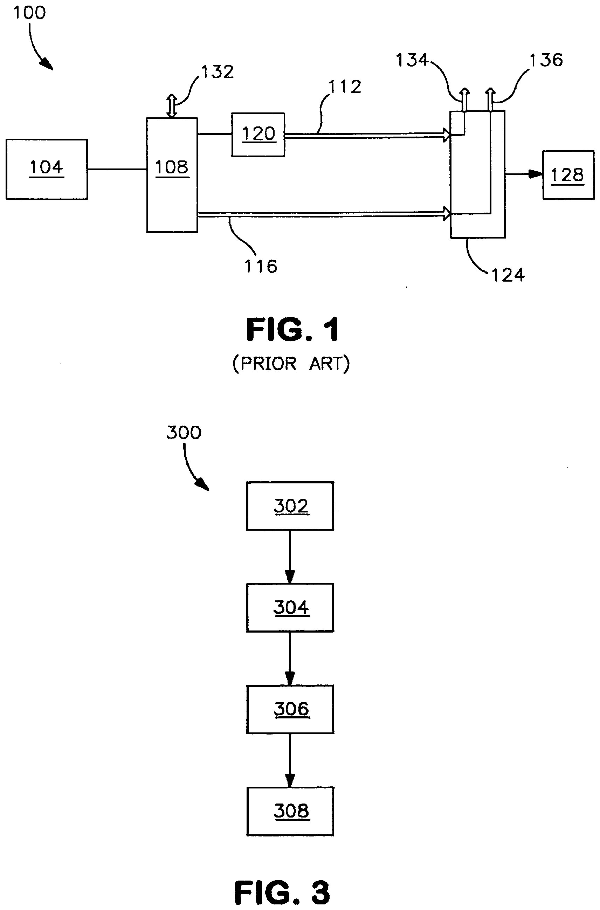

Figure 1 is a schematic view of an example of a conventional GC system **100.** A carrier gas supply **104** is operated to establish a flow of carrier gas to a gas flow controller **108** (typically a pressure controller). In this example, the original carrier gas flow is split into two carrier gas flows, either by the gas flow controller **108** or by a separate flow splitter (not shown). One of the carrier gas flows is inputted to an analytical column **112** while the other carrier gas flow is inputted to a reference column **116.** The columns **112**, **116** are enclosed in a suitable housing (not shown), which may include an oven as noted above. A sample injector **120** positioned at or near the head of the analytical column **112** introduces a gas-phase or vaporized sample into the carrier gas flow, whereby a sample-bearing (sample and carrier) gas is flowed through the analytical column **112** while a carrier-only gas is flowed through the reference column **116.** The respective distal ends of the analytical column **112** and the reference column **116** are fluidly connected to a TCD **124.** The TCD **124** receives the analytically separated sample gas effluent and the reference gas effluent, generates electrical signals based on measurements of thermal conductivity, and transmits the signals to a data acquisition system **128** for further processing, readout/display, etc. By way of background, the TCD **124** typically includes a four-element Wheatstone bridge in which the sensing elements are temperature-sensitive (e.g., resistive filaments, semiconducting thermistors, etc.). Some of the sensing elements are exposed to the sample gas flow while the other sensing elements are exposed to the reference gas flow. The resistances of the sensing elements vary in response to temperature changes. The temperature of each sensing element depends on the thermal conductivity of the sample gas or reference gas flowing around the sensing element. Thermal conductivity in turn depends on gas composition and thus may be correlated to the concentration of a particular gas molecule. The TCD **124** in this case is arranged such that the thermal conductivity of the reference gas (i.e., the carrier gas component of the sample gas as well as the carrier gas-only reference gas) is canceled out from the measurement signal outputted to the data acquisition system **128.** Among other tasks, the data acquisition system **128** correlates the measurement signals to the concentration of the sample gas as it flows in analytically separated form from the analytical column **112**, thereby enabling the generation of information-rich sample peaks the data output.

Of particular note for purposes of the present subject matter, the pressure controller **108** includes an ambient pressure reference channel **132** and the TCD **124** includes a sample gas outlet vent **134** and a reference gas outlet vent **136.** These features allow gases to vent to atmosphere, whereby the entire pneumatic system of the GC system **100** essentially operates as an open system that is exposed to the ambient conditions in which the GC system **100** resides. It thus can be seen that the conventional GC system **100** is highly susceptible to ambient conditions, particularly the pressure fluctuations that may occur as described above. Prior solutions to minimizing the influence of ambient pressure fluctuations have been mainly focused on reducing ambient pressure fluctuations in the direct environment in which the GC system **100** operates (e.g., reducing air currents in the laboratory) and not on making improvements to the GC system 100 itself.

US 2006/196247 A1 (GAMACHE YVES et al, 07-09-2006) discloses a gas chromatography apparatus comprising a separation column, a sample gas introduction device communicating with the column, a valve acting as a gas pressure controller, a detector communicating with the column and comprising a sample gas outlet, a variable volume suitable for regulating the gas pressure in the apparatus and a plurality of valves interconnecting or isolating the chromatography components.

In view of the foregoing, there is a need for providing GC apparatus and methods that render the deleterious effects of ambient pressure fluctuations negligible.

### SUMMARY OF THE INVENTION

The invention is defined in claims 1 and 5, respectively.

Particular embodiments are set out in the dependent claims.

To address the foregoing problems, in whole or in part, and/or other problems that may have been observed by persons skilled in the art, the present disclosure provides apparatus, devices, systems, instruments, or methods or processes, as described by way of example in implementations set forth below.

According to one implementation, a gas chromatography apparatus includes an analytical column, a sample gas introduction device communicating with the analytical column, and a gas pressure controller including a carrier gas inlet, a carrier gas outlet communicating with the sample gas introduction device, and a gas pressure reference outlet. The apparatus further includes a gas detector including a sample gas inlet communicating with the analytical column and a sample gas outlet, and a gas buffer vessel communicating with the gas pressure reference outlet and the sample gas outlet. The gas buffer vessel includes a gas buffer outlet. The apparatus further includes a gas outlet valve configured for switching the gas buffer outlet between an open condition in which the pressure controller, the detector and the gas buffer vessel are in fluid communication with an ambient environment surrounding the gas chromatography apparatus, and a closed condition in which the pressure controller, the detector and the gas buffer vessel are fluidly isolated from the ambient environment.

According to another implementation, the apparatus further includes a system controller communicating with the gas outlet valve and configured for actuating the gas outlet valve between the open and closed conditions in coordination with controlling the sample introduction device.

According to another implementation, a method is provided for operating a gas chromatography apparatus. A carrier gas is flowed from a carrier gas supply toward an analytical column at a carrier gas pressure. A sample is added to the carrier gas to form a sample gas. The sample gas is flowed through the analytical column to a gas detector that includes a sample gas outlet communicating with a gas buffer vessel. The carrier gas pressure is controlled relative to a buffer pressure of the gas buffer vessel.

According to another implementation, controlling the carrier gas pressure includes operating a gas pressure controller interposed between the carrier gas supply and the analytical column and fluidly communicating with the gas buffer vessel.

According to another implementation, controlling the carrier gas pressure includes fluidly isolating the pressure controller, the gas detector and the gas buffer vessel from an ambient environment external to the gas chromatography apparatus.

According to another implementation, controlling the carrier gas pressure includes switching a gas outlet valve of the gas buffer vessel from an open position to a closed position, wherein at the open position the detector and the gas buffer vessel are in fluid communication with an ambient environment external to the gas chromatography apparatus, and at the closed position the detector and the gas buffer vessel are fluidly isolated from the ambient environment.

According to another implementation, the carrier gas may also be flowed from the carrier gas supply through a reference column and to the gas detector. Controlling the carrier gas pressure may include operating a gas pressure controller to control respective carrier gas flows from the carrier gas supply to the analytical column and to the reference column, venting carrier gas from the gas pressure controller to the gas buffer vessel, venting sample gas from the sample gas outlet to the gas buffer vessel, and venting reference gas from a reference gas outlet of the gas detector to the gas buffer vessel.

According to another aspect of any of the apparatus or methods disclosed herein, chromatographic data is acquired from a sample based on measurements of the sample gas taken at the gas detector.

Other apparatus, devices, systems, methods, features and/or advantages of the invention will be or will become apparent to one with skill in the art upon examination of the following figures and detailed description. It is intended that all such additional apparatus, devices, systems, methods, features and/or advantages be included within this description, be within the scope of the invention, and be protected by the accompanying claims.

### BRIEF DESCRIPTION OF THE DRAWINGS

Figure 1 is a schematic view of an example of a gas chromatographic system according to a conventional design.
Figure 2 is a schematic view of an example of a gas chromatographic system according to an implementation of the present invention.
Figure 3 is a flow diagram illustrating an example of a method provided in accordance with the present invention.

### DETAILED DESCRIPTION OF THE INVENTION

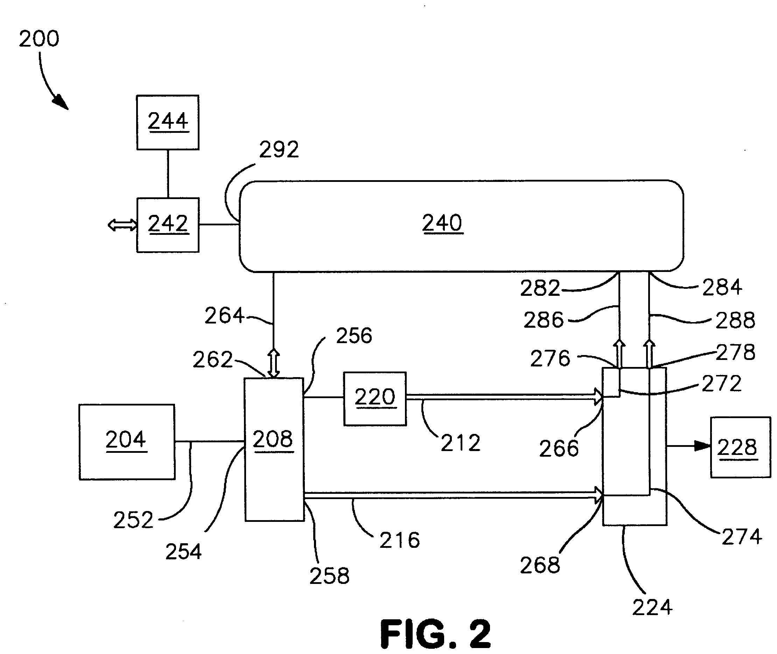

Figure 2 is a schematic view of an example of a gas chromatograph (GC) apparatus or system **200** according to an implementation of the present invention. It will be understood that figure 2 is a highly simplified schematic illustration that includes a few basic components of the GC apparatus **200.** For simplicity, additional components, features and details that may be necessary for practical implementation of the GC apparatus **200** are not specifically shown but readily appreciated by persons skilled in the art. Also for simplicity, components similar to those illustrated in figure 1 are designated with similar reference numerals with the understanding that such components may be modified or adapted as necessary for carrying out the present teaching.

In the present example, the GC apparatus **200** generally includes a carrier gas supply **204**, one or more gas flow controllers **208**, an analytical or sample column **212**, a reference column **216**, a sample introduction device **220**, a gas detector **224**, a data acquisition system **228**, a gas buffer vessel **240**, a gas buffer outlet valve **242**, and a system controller **244.** The carrier gas supply **204** may be any suitable device or system for establishing a flow of a suitable carrier gas (e.g., hydrogen, helium, nitrogen, etc.) through a carrier gas supply line **252** (e.g., a suitable conduit such as a tube or pipe) to the GC columns **212**, **216,** as regulated by the gas flow controller **208.** As noted above, the GC columns **212, 216** may be enclosed in an enclosure (not shown) that often functions as an oven for heating the GC columns **212**, **216** or alternatively may be heated by direct means. A portion of one or both GC columns **212**, **216** may be coiled to accommodate a desired length while minimizing the size of the enclosure. The gas flow controller **208** includes a carrier gas input **254** for receiving the supply of carrier gas and a carrier gas output for flowing carrier gas to the analytical column **212.** In the present example in which a reference gas is utilized, the carrier gas output includes a first carrier gas output **256** for flowing carrier gas to the analytical column **212** and a second carrier gas output **258** for flowing carrier gas to the reference column **216.** The present example assumes that the gas flow controller **208** implements the splitting of the carrier gas into the two separate streams. It will be understood, however, that a distinct flow splitter may be placed in fluid communication with the gas flow controller **208** in which case the first carrier gas output **256** and the second carrier gas output **258** may be considered as being the outputs of the flow splitter. In the schematic illustration, the gas flow controller **208** may represent one or more components (e.g., pressure regulator, flow controller, etc.). Generally, the gas flow controller **208** may have any suitable design that is capable of switching the flow of carrier gas between on and off states and regulating flow rate, typically by regulating pressure. The gas flow controller **208** may also be capable of sensing the carrier gas pressure and providing a readout signal thereof. In accordance with the present teachings, the gas flow controller **208** further includes a gas pressure reference outlet **262**, which fluidly communicates with the gas buffer vessel **240** either directly or via a gas line **264.**

The sample introduction device **220** may include a syringe or other fluid moving means to inject an analyte sample into the first carrier gas flow from the gas flow controller **208**, whereby a flow of sample gas (containing both sample and carrier gas components) enters the analytical column **212.** Sample injection may be carried out on an automated, semi-automated, or manual basis. In the present example in which a reference gas is measured, the gas detector **224** includes both a sample gas inlet **266** fluidly communicating with the outlet of the analytical column **212** and a reference gas inlet **268** fluidly communicating with the outlet of the reference column **216.** The eluted components from the GC columns **212**, **216** flow through respective internal passages **272**, **274** of the detector where the temperature-sensitive elements are located and exit the detector **224** via a respective sample gas outlet **276** and a reference gas outlet **278.** In accordance with the present teachings, the sample gas outlet **276** and the reference gas outlet **278** fluidly communicate with respective inlets **282**, **284** of the gas buffer vessel **240** either directly or via respective gas lines **286**, **288.** The gas detector **224** in the present example may be a TCD.

The gas buffer vessel **240** may be any gas-tight container of sufficient internal volume to receive gas flows from the gas pressure reference outlet **262** of the pressure controller **208** and from the sample gas outlet **276** and the reference gas outlet **278** of the gas detector **208**, while maintaining a gas pressure suitable for the chromatographic operations implemented by the GC apparatus **200.** The gas buffer vessel **240** includes a gas buffer outlet **292.** The gas outlet valve **242** controls fluid flow through the gas buffer outlet **292.** For this purpose, the gas outlet valve **242** may be any type of valve capable of being actuated between open and closed positions (or conditions, states, etc.). In one non-limiting example, the gas outlet valve **242** may be a solenoid valve. In the open position, the interior of the gas buffer vessel **240** is exposed to the ambient environment via the gas buffer outlet **292.** Hence, the pressure controller **208**, the gas detector **224** and associated gas lines **264**, **286**, **288** are likewise exposed to the ambient environment. In the closed position, the gas buffer outlet **292** is closed off from the ambient environment and consequently the internal pneumatics of the GC system **200** (i.e., the gas buffer vessel **240**, pressure controller **208**, gas detector **224**, gas lines **264**, **286**, **288**, etc.) is fluidly isolated from the ambient environment.

As an example of implementing a method for operating the GC system **200**, the gas outlet valve **242** may be switched to the closed position during a run mode of operation (i.e., during the running of a chromatography experiment) and switched to the open position during a non-run mode of operation (i.e., a period during which the acquisition of chromatographic data is not desired). Prior to the initiation of a chromatography run, the GC system **200** may initially be in the non-run mode. With the gas buffer outlet **292** open, the pressure inside the gas buffer vessel **240** equals the ambient pressure and thus the gas pressure reference outlet **262**, the sample gas outlet **276** and the reference gas outlet **278** are likewise at ambient pressure. Subsequently, at the start of a chromatography run the GC system **200** is switched to the run mode by actuating the gas outlet valve **242** to close the gas buffer outlet **292**, after which point the GC system **200** operates as a closed system relative to the pressure inside the gas buffer vessel **240**, and the gas pressure reference outlet **262**, the sample gas outlet **276** and the reference gas outlet **278** are no longer influenced by ambient pressure fluctuations. The carrier gas supply **204**, sample introduction device **220**, gas detector **224** and data acquisition system **228** may then be operated in the usual manner for implementing the desired chromatographic analysis of a sample material. It will be noted that the carrier gas flowing into the GC system **200** from the external gas supply **204** will be vented into the gas buffer vessel **240**, causing a slight increase in pressure inside the vessel **240** over the course of the analysis time. By choosing the proper dimensions of the gas buffer vessel **240** in relation to the carrier gas flow rate and the analysis time, this pressure increase will be minimal and will not result in an erratically disturbed baseline. Moreover, as a result of the configuration taught herein, the pressure controller **208** now controls the carrier gas pressure relative to the pressure inside the gas buffer vessel **240** (not relative to ambient), thereby keeping the pressure drop across the analytical system constant.

The GC apparatus **200** may also include a suitable system controller **244** that is configured to switch the GC apparatus **200** between the run and non-run modes of operation and control one or more of the operative components above during each mode of operation. The system controller **244** may be electronic processor-based and may be capable of executing instructions contained in software. Thus, for instance, the system controller **244** may be an electronic controller such as a microcontroller, microprocessor, application specific integrated circuit (ASIC), digital signal processor (DSP), computer (e.g., personal computer, networked client terminal, handheld computing device, etc.), or the like, and may be capable of receiving and/or sending various types of electrical signals such as data signals, measurement signals, and timing and control signals. Generally, the system controller **244** schematically illustrated in figure 2 may include hardware, firmware, software, or a combination of two or more of the foregoing. The system controller **244** may communicate with various components of the GC system **200** via wired or wireless communication links. In particular, the system controller **244** is configured for transmitting control signals to the gas outlet valve **242** to actuate the gas outlet valve **242** between the open and closed positions. The system controller **244** may also communicate (not shown) with other components such as the carrier gas supply **204**, sample introduction device **220**, pressure controller **208**, gas detector **224**, and data acquisition system **228** as needed for coordinating or synchronizing their respective operations with that of the gas outlet valve **242.** One or more operations of the system controller **244** may be controlled by direct user input or by programmed instructions.

While the example relating to figure 2 utilizes a TCD as a detector, it will be understood that the subject matter disclosed herein is not limited to any particular type of detector. The subject matter taught herein has been found particularly useful in GC systems utilizing a TCD. However, GC systems utilizing other types of detectors that conventionally rely on venting gases to atmosphere may also benefit from implementation of the present subject matter.

Figure 3 is a flow diagram **300** illustrating an example of a method provided in accordance with the present invention. The flow diagram **300** may also represent an apparatus or system configured for performing the illustrated method. At block **302**, a GC system is isolated from ambient conditions. This may entail switching the GC system from an open condition in which the GC system is exposed to ambient pressure conditions to a closed condition in which the effects of ambient pressure conditions are eliminated or at least significantly reduced or rendered negligible. At block **304**, the GC system is then operated to initiate the chromatographic flow of a sample through the system, whereby the sample is carried through a GC column to a suitable detector. At block **306**, chromatographic data is acquired and processed in an appropriate manner to complete the analysis of the sample. The activities associated with blocks **304** and **306** occur while the GC system is maintained in the ambient-isolated state and thus are shielded from the adverse effects of ambient pressure perturbations. During this time, the flow of carrier gas through the system may be controlled relative to the internal gas pressure of the system, i.e., without needing to rely on ambient pressure as a reference. Also during this time, gases may be prevented from being vented to atmosphere. At block **308**, after the chromatographic experiment the GC system may be switched (back) to an open condition. As noted above, figure 3 may represent an example of an apparatus or system **300** capable of performing the illustrated method. Accordingly, the blocks **302-308** may be considered as depicting one or more means for performing the functions or steps corresponding to those blocks **302-308** and just described. An example of such an apparatus is described above and illustrated in figure 2.

In general, the term "communicate" (for example, a first component "communicates with" or "is in communication with" a second component) is used herein to indicate a structural, functional, mechanical, electrical, optical, magnetic, ionic or fluidic relationship between two or more components or elements. As such, the fact that one component is said to communicate with a second component is not intended to exclude the possibility that additional components may be present between, and/or operatively associated or engaged with, the first and second components.

It will be understood that various aspects or details of the invention may be changed without departing from the scope of the invention. Furthermore, the foregoing description is for the purpose of illustration only, and not for the purpose of limitation-the invention being defined by the claims.

## Claims

1. A gas chromatography apparatus (200), comprising:
an analytical column (212);
a sample gas introduction device (220) communicating with the analytical column (212);
a gas pressure controller (208) comprising a carrier gas inlet (254), a carrier gas outlet (256) communicating with the sample gas introduction device (220), and a gas pressure reference outlet (262);
a gas detector (224) comprising a sample gas inlet (266) communicating with the analytical column (212) and a sample gas outlet (276);
a gas buffer vessel (240) communicating with the gas pressure reference outlet (262) and the sample gas outlet (276), the gas buffer vessel comprising a gas buffer outlet (292); and
a gas outlet valve (242) configured for switching the gas buffer outlet (292) between an open condition in which the pressure controller (208), the detector (224) and the gas buffer vessel (240) are in fluid communication with an ambient environment surrounding the gas chromatography apparatus (200), and a closed condition in which the pressure controller (208), the detector (224) and the gas buffer vessel (240) are fluidly isolated from the ambient environment.

2. The gas chromatography apparatus of claim 1, further comprising a reference column (216), wherein the carrier gas outlet of the gas pressure controller (208) comprises a first carrier gas outlet (256) communicating with the analytical column (212) and a second carrier gas outlet (258) communicating with the reference column (216), and the gas detector (224) further comprises a reference gas inlet (268) communicating with the reference column (216) and a reference gas outlet (278) communicating with the gas buffer vessel (240).

3. The gas chromatography apparatus of claim 1 or 2, wherein the gas detector (224) is a thermal conductivity detector.

4. The gas chromatography apparatus of claim 1, 2 or 3, further comprising a system controller (244) communicating with the gas outlet valve (242) and configured for actuating the gas outlet valve between the open and closed conditions in coordination with controlling the sample introduction device (220).

5. A method for operating the gas chromatography apparatus (200) of any one of claims 1 to 4, the method comprising:
flowing a carrier gas from a carrier gas supply (204) toward the analytical column (212) at a carrier gas pressure;
adding a sample to the carrier gas to form a sample gas;
flowing the sample gas through the analytical column (212) to the gas detector (224), the gas detector comprising the sample gas inlet (266) communicating with the analytical column (212) and the sample gas outlet (276) communicating with the gas buffer vessel (240); and
controlling the carrier gas pressure relative to a buffer pressure of the gas buffer vessel (240).

6. The method of claim 5, wherein controlling the carrier gas pressure comprises operating the gas pressure controller (208) interposed between the carrier gas supply (204) and the analytical column (212) and fluidly communicating with the gas buffer vessel (240).

7. The method of claim 5, wherein controlling the carrier gas pressure comprises operating the gas pressure controller (208) interposed between the carrier gas supply (204) and the analytical column (212) and fluidly communicating with the gas buffer vessel (240), venting carrier gas from the gas pressure controller (208) to the gas buffer vessel (240), and venting sample gas from the sample gas outlet (276) to the gas buffer vessel (240).

8. The method of claim 5, 6 or 7, wherein controlling the carrier gas pressure comprises operating the gas pressure controller (208) interposed between the carrier gas supply (204) and the analytical column (212) and fluidly communicating with the gas buffer vessel (240), and fluidly isolating the pressure controller (208), the gas detector (224) and the gas buffer vessel (240) from an ambient environment external to the gas chromatography apparatus (200).

9. The method of any of claims 5 to 8, wherein controlling the carrier gas pressure comprises switching the gas outlet valve (292) of the gas buffer vessel (240) from an open position to a closed position, wherein at the open position the gas detector (224) and the gas buffer vessel (240) are in fluid communication with an ambient environment external to the gas chromatography apparatus (200), and at the closed position the gas detector (224) and the gas buffer vessel (240) are fluidly isolated from the ambient environment.

10. The method of any of claims 5 to 9, further comprising permitting the buffer pressure to increase above an ambient pressure of the ambient environment while the gas outlet valve (242) is in the closed position.

11. The method of claim 9, further comprising ceasing the flow of sample gas through the analytical column (212), and switching the gas outlet valve (242) from the closed position to the open position.

12. The method of any of claims 5 to 11, further comprising switching the gas outlet valve (242) in timed coordination with flowing the carrier gas and adding the sample.

13. The method of any of claims 6 to 12, further comprising flowing the carrier gas from the carrier gas supply (204) through a reference column (216) and to the gas detector (224), wherein the reference column (216) and the analytical column (212) are arranged in a parallel fluid connection between the gas pressure controller (208) and the gas detector (224).

14. The method of any of claims 6 to 12, further comprising flowing the carrier gas from the carrier gas supply (204) through a reference column (216) and to the gas detector (224), wherein the reference column (216) and the analytical column (212) are arranged in a parallel fluid connection between the gas pressure controller (208) and the gas detector (224), and wherein controlling the carrier gas pressure comprises operating a gas pressure controller (208) to control respective carrier gas flows from the carrier gas supply (204) to the analytical column (212) and to the reference column (216), venting carrier gas from the gas pressure controller (208) to the gas buffer vessel (240), venting sample gas from the sample gas outlet (276) to the gas buffer vessel (240), and venting reference gas from a reference gas outlet (278) of the gas detector (224) to the gas buffer vessel (240).

15. The method of any of claims 5 to 14, further comprising operating the gas detector (224) by measuring a thermal conductivity of the sample gas.

## Patentansprüche

1. Gaschromatographievorrichtung (200), umfassend: eine Analysesäule (212),
ein Messgaseinführungsgerät (220), das mit der Analysesäule (212) in Verbindung steht,
einen Gasdruckregler (208), umfassend einen Trägergaseinlass (254), einen Trägergasauslass (256), der mit dem Messgaseinführungsgerät (220) in Verbindung steht, und einen Gasdruckreferenzauslass (262),
einen Gasdetektor (224), der einen mit der Analysesäule (212) und einem Messgasauslass (276) in Verbindung stehenden Messgaseinlass (266) umfasst, einen mit dem Gasdruckreferenzauslass (262) und dem Messgasauslass (276) in Verbindung stehenden Gaspufferbehälter (240), wobei der Gaspufferbehälter einen Gaspufferauslass (292) aufweist, und
ein Gasauslassventil (242), ausgebildet für das Umschalten des Gaspufferausgangs (292) zwischen einem offenen Zustand, in welchem sich der Druckregler (208), der Detektor (224) und der Gaspufferbehälter (240) in Fluidverbindung mit einer Umgebung befinden, die die Gaschromatographievorrichtung (200) umgibt, und einem geschlossenen Zustand, in welchem der Druckregler (208), der Detektor (224) und der Gaspufferbehälter (240) von der Umgebung fluidisch isoliert sind.

2. Gaschromatographievorrichtung nach Anspruch 1, ferner umfassend eine Referenzsäule (216), wobei der Trägergasauslass des Gasdruckreglers (208) einen ersten Trägergasauslass (256) aufweist, der mit der Analysesäule (212) in Verbindung steht, und einen zweiten Trägergasauslass (258) aufweist, der mit der Referenzsäule (216) in Verbindung steht, und wobei der Gasdetektor (224) ferner einen Referenzgaseinlass (268) aufweist, der mit der Referenzgassäule (216) in Verbindung steht, und einen Referenzgasauslass (278) aufweist, der mit dem Gaspufferbehälter (240) in Verbindung steht.

3. Gaschromatographievorrichtung nach Anspruch 1 oder 2, wobei der Gasdetektor (224) ein Wärmeleitfähigkeitsdetektor ist.

4. Gaschromatographievorrichtung nach Anspruch 1, 2 oder 3, ferner umfassend einen Systemregler (244), der mit dem Gasauslassventil (242) in Verbindung steht und für die Betätigung des Gasauslassventils zwischen den offenen und geschlossenen Zuständen in Abstimmung mit der Regelung der Probeneinführungsvorrichtung (220) ausgebildet ist.

5. Verfahren zum Betreiben der Gaschromatographievorrichtung (200) eines der Ansprüche 1 bis 4, wobei das Verfahren Folgendes umfasst:
Strömen eines Trägergases von einer Trägergaszufuhr (204) bei einem Trägergasdruck zur Analysesäule (212),
Zugabe einer Probe dem Trägergas, um ein Messgas zu bilden,
Strömen des Messgases durch die Analysesäule (212) zum Gasdetektor (224), wobei der Gasdetektor den mit der Analysesäule (212) in Verbindung stehenden Messgaseinlass (266) und den mit dem Gaspufferbehälter (240) in Verbindung stehenden Messgasauslass (276) umfasst, und
Regeln des Trägergasdrucks relativ zu einem Pufferdruck des Gaspufferbehälters (240).

6. Verfahren nach Anspruch 5, bei dem das Regeln des Trägergasdrucks das Betreiben des zwischen der Trägergaszufuhr (204) und der Analysesäule (212) zwischengeschalteten und mit dem Gaspufferbehälter (240) in Fluidverbindung stehenden Gasdruckreglers (208) umfasst.

7. Verfahren nach Anspruch 5, wobei das Regeln des Trägergasdrucks das Betreiben des zwischen der Trägergaszufuhr (204) und der Analysesäule (212) zwischengeschalteten und mit dem Gaspufferbehälter (240) in Fluidverbindung stehenden Gasdruckreglers (208), das Absaugen von Trägergas aus dem Gasdruckregler (208) zum Gaspufferbehälter (240) und das Absaugen von Messgas aus dem Messgasauslass (276) zum Gaspufferbehälter (240) umfasst.

8. Verfahren nach Anspruch 5, 6 oder 7, wobei das Regeln des Trägergasdrucks das Betreiben des zwischen der Trägergaszufuhr (204) und der Analysesäule (212) zwischengeschalteten und mit dem Gaspufferbehälter (240) in Fluidverbindung stehenden Gasdruckreglers (208) sowie das fluidische Isolieren des Druckreglers (208), des Gasdetektors (224) und des Gaspufferbehälters (240) von einer Umgebung außerhalb der Gaschromatographievorrichtung (200) umfasst.

9. Verfahren nach einem der Ansprüche 5 bis 8, wobei das Regeln des Trägergasdrucks das Umschalten des Gasauslassventils (292) des Gaspufferbehälters (240) von einer offenen Stellung in eine geschlossene Stellung umfasst, wobei in der offenen Stellung der Gasdetektor (224) und der Gaspufferbehälter (240) in Fluidverbindung mit einer Umgebung außerhalb der Gaschromatographievorrichtung (200) stehen und in der geschlossenen Stellung der Gasdetektor (224) und der Gaspufferbehälter (240) von der Umgebung fluidisch isoliert sind.

10. Verfahren nach einem der Ansprüche 5 bis 9, ferner umfassend das Zulassen das Anstiegs des Pufferdrucks über einen Umgebungsdruck der Umgebung hinaus, während sich das Gasauslassventil (242) in geschlossener Stellung befindet.

11. Verfahren nach Anspruch 9, ferner umfassend das Unterbinden des Durchflusses von Messgas durch die Analysesäule (212) und das Umschalten des Gasauslassventils (242) aus der geschlossenen Stellung in die offene Stellung.

12. Verfahren nach einem der Ansprüche 5 bis 11, ferner umfassend das Schalten des Gasauslassventils (242) in zeitlicher Abstimmung mit dem Strömen des Trägergases und dem Hinzufügen der Probe.

13. Verfahren nach einem der Ansprüche 6 bis 12, ferner umfassend das Strömen des Trägergases von der Trägergaszufuhr (204) durch eine Referenzsäule (216) und zum Gasdetektor (224), wobei die Referenzsäule (216) und die Analysesäule (212) in einer parallelen Fluidverbindung zwischen dem Gasdruckregler (208) und dem Gasdetektor (224) angeordnet sind.

14. Verfahren nach einem der Ansprüche 6 bis 12, ferner umfassend das Strömen des Trägergases von der Trägergaszufuhr (204) durch eine Referenzsäule (216) und zu dem Gasdetektor (224), wobei die Referenzsäule (216) und die Analysesäule (212) in einer parallelen Fluidverbindung zwischen dem Gasdruckregler (208) und dem Gasdetektor (224) angeordnet sind, und wobei das Regeln des Trägergasdrucks das Betreiben eines Gasdruckreglers (208) zum Regeln jeweiliger Trägergasströme von der Trägergaszufuhr (204) zur Analysesäule (212) und zur Referenzsäule (216), das Absaugen von Trägergas aus dem Gasdruckregler (208) zu dem Gaspufferbehälter (240), das Absaugen von Messgas aus dem Messgasauslass (276) zu dem Gaspufferbehälter (240) und das Absaugen von Referenzgas aus einem Referenzgasauslass (278) des Gasdetektors (224) zu dem Gaspufferbehälter (240) umfasst.

15. Verfahren nach einem der Ansprüche 5 bis 14, ferner umfassend den Betrieb des Gasdetektors (224) durch Messen einer Wärmeleitfähigkeit des Messgases.

## Revendications

1. Appareil de chromatographie en phase gazeuse (200), comprenant :
une colonne analytique (212) ;
un dispositif d'introduction de gaz échantillon (220) communiquant avec la colonne analytique (212) ;
un dispositif de régulation de pression de gaz (208) comprenant une entrée de gaz porteur (254), une sortie de gaz porteur (256) communiquant avec le dispositif d'introduction de gaz échantillon (220) et une sortie de référence de pression de gaz (262) ;
un détecteur de gaz (224) comprenant une entrée de gaz échantillon (266) communiquant avec la colonne analytique (212) et une sortie de gaz échantillon (276) ; un réservoir tampon de gaz (240) communiquant avec la sortie de référence de pression de gaz (262) et la sortie de gaz échantillon (276), ledit réservoir tampon de gaz comprenant une sortie tampon de gaz (292) ; et
une soupape de sortie de gaz (242) conçue pour commuter la sortie tampon de gaz (292) entre un état ouvert dans lequel le dispositif de régulation de pression (208), le détecteur (224) et le réservoir tampon de gaz (240) sont en communication fluidique avec un milieu ambiant entourant l'appareil de chromatographie en phase gazeuse (200) et un état fermé dans lequel le dispositif de régulation de pression (208), le détecteur (224) et le réservoir tampon de gaz (240) sont isolés d'un point de vue fluidique du milieu ambiant.

2. Appareil de chromatographie en phase gazeuse selon la revendication 1, comprenant en outre une colonne de référence (216), ladite sortie de gaz porteur du dispositif de régulation de pression de gaz (208) comprenant une première sortie de gaz porteur (256) communiquant avec la colonne analytique (212) et une seconde sortie de gaz porteur (258) communiquant avec la colonne de référence (216) et ledit détecteur de gaz (224) comprenant en outre une entrée de gaz de référence (268) communiquant avec la colonne de référence (216) et une sortie de gaz de référence (278) communiquant avec le réservoir tampon de gaz (240).

3. Appareil de chromatographie en phase gazeuse selon la revendication 1 ou 2, ledit détecteur de gaz (224) étant un détecteur de conductibilité thermique.

4. Appareil de chromatographie en phase gazeuse selon la revendication 1, 2 ou 3, comprenant en outre un dispositif de régulation de système (244) communiquant avec la soupape de sortie de gaz (242) et conçu pour actionner la soupape de sortie du gaz entre les états ouverts et fermés en coordination avec la régulation du dispositif d'introduction d'échantillon (220).

5. Procédé permettant de faire fonctionner l'appareil de chromatographie en phase gazeuse (200) selon l'une quelconque des revendications 1 à 4, ledit procédé comprenant :
l'écoulement d'un gaz porteur depuis un dispositif d'alimentation en gaz porteur (204) vers la colonne analytique (212) à une pression de gaz porteur ;
l'ajout d'un échantillon au gaz porteur pour former un gaz échantillon ;
l'écoulement du gaz échantillon à travers la colonne analytique (212) jusqu'au détecteur de gaz (224), ledit détecteur de gaz comprenant l'entrée de gaz échantillon (266) communiquant avec la colonne analytique (212) et la sortie de gaz échantillon (276) communiquant avec le réservoir tampon de gaz (240) ; et
la régulation de la pression de gaz porteur par rapport à une pression tampon du réservoir tampon de gaz (240).

6. Procédé selon la revendication 5, ladite régulation de la pression de gaz porteur comprenant le fonctionnement du dispositif de régulation de pression de gaz (208) interposé entre le dispositif d'alimentation en gaz porteur (204) et la colonne analytique (212) et en communication fluidique avec le réservoir tampon de gaz (240).

7. Procédé selon la revendication 5, ladite régulation de la pression de gaz porteur comprenant le fonctionnement du dispositif de régulation de pression de gaz (208) interposé entre le dispositif d'alimentation en gaz porteur (204) et la colonne analytique (212) et en communication fluidique avec le réservoir tampon de gaz (240), l'évacuation du gaz porteur depuis le dispositif de régulation de pression de gaz (208) jusqu'au réservoir tampon de gaz (240) et l'évacuation du gaz échantillon depuis la sortie de gaz de l'échantillon (276) jusqu'au réservoir tampon de gaz (240).

8. Procédé selon la revendication 5, 6 ou 7, ladite régulation de pression de gaz porteur comprenant le fonctionnement du dispositif de régulation de pression de gaz (208) interposé entre le dispositif d'alimentation en gaz porteur (204) et la colonne analytique (212) et en communication fluidique avec le réservoir tampon de gaz (240) et l'isolation du point de vue fluidique du dispositif de régulation de pression (208), du détecteur de gaz (224) et du réservoir tampon de gaz (240) d'un milieu ambiant externe à l'appareil de chromatographie en phase gazeuse (200).

9. Procédé selon l'une quelconque des revendications 5 à 8, ladite régulation de la pression de gaz porteur comprenant la commutation de la soupape de sortie de gaz (292) du réservoir tampon de gaz (240) d'une position ouverte à une position fermée, en position ouverte, ledit détecteur de gaz (224) et ledit réservoir tampon de gaz (240) étant en communication fluidique avec un milieu ambiant externe à l'appareil de chromatographie en phase gazeuse (200) et en position fermée, ledit détecteur de gaz (224) et ledit réservoir tampon de gaz (240) étant isolés d'un point de vue fluidique du milieu ambiant.

10. Procédé selon l'une quelconque des revendications 5 à 9, comprenant en outre la possibilité donnée à la pression tampon d'augmenter de manière à être supérieure à une pression ambiante du milieu ambiant alors que la soupape de sortie de gaz (242) est dans la position fermée.

11. Procédé selon la revendication 9, comprenant en outre l'arrêt de l'écoulement de gaz échantillon à travers la colonne analytique (212) et la commutation de la soupape de sortie de gaz (242) de la position fermée à la position ouverte.

12. Procédé selon l'une quelconque des revendications 5 à 11, comprenant en outre la commutation de la soupape de sortie de gaz (242) en coordination temporelle avec l'écoulement du gaz porteur et l'ajout de l'échantillon.

13. Procédé selon l'une quelconque des revendications 6 à 12, comprenant en outre l'écoulement du gaz porteur depuis le dispositif d'alimentation en gaz porteur (204) à travers une colonne de référence (216) et jusqu'au détecteur de gaz (224), ladite colonne de référence (216) et ladite colonne analytique (212) étant agencées en un raccord fluidique parallèle entre le dispositif de régulation de pression de gaz (208) et le détecteur de gaz (224).

14. Procédé selon l'une quelconque des revendications 6 à 12, comprenant en outre l'écoulement du gaz porteur depuis le dispositif d'alimentation en gaz porteur (204) à travers une colonne de référence (216) et jusqu'au détecteur de gaz (224), ladite colonne de référence (216) et ladite colonne analytique (212) étant agencées en un raccord fluidique parallèle entre le dispositif de régulation de pression de gaz (208) et le détecteur de gaz (224), et ladite régulation de pression de gaz porteur comprenant le fonctionnement d'un dispositif de régulation de pression de gaz (208) pour réguler les écoulements de gaz porteur respectifs depuis le dispositif d'alimentation en gaz porteur (204) jusqu'à la colonne analytique (212) et jusqu'à la colonne de référence (216), l'évacuation de gaz porteur depuis le dispositif de régulation de pression de gaz (208) jusqu'au réservoir tampon de gaz (240), l'évacuation du gaz échantillon depuis la sortie de gaz échantillon (276) jusqu'au réservoir tampon de gaz (240) et l'évacuation du gaz de référence depuis une sortie de gaz de référence (278) du détecteur de gaz (224) jusqu'au réservoir tampon de gaz (240).

15. Procédé selon l'une quelconque des revendications 5 à 14, comprenant en outre le fonctionnement du détecteur de gaz (224) en mesurant une conductibilité thermique du gaz échantillon.
